# EUROPEAN PATENT APPLICATION

(11) **EP 4 764 221 A1**
(43) Date of publication of application: **24.06.2026**
(21) Application number: 24222514.2
(22) Date of filing: 20.12.2024
(51) Int. Cl.: F04D 17/10, F04D 25/06, F04D 29/42, F04D 29/58

(54) **ELECTRIC COMPRESSOR MODULE WITH HEATER**

(71) Applicant: Borgwarner Inc., Auburn Hills, Michigan 48326 (US)
(72) Inventor: TORRADO, Miguel Folgar, 36618 Vilagarcía de Arousa (ES); TABARÉS, Iago Gonzáles, 36202 Vigo (ES)
(74) Representative: Peterreins Schley

(57) **Abstract**

The present disclosure relates to an electric compressor module (100) for a thermal management system of an electric vehicle. The electric compressor module (100) comprises a housing (110), an electric compressor (120), a heater (130), control electronics (140) and electric connectors (150). The housing (110) includes a compressor housing section (112) and a control housing section (114). The electric compressor (120) has a rotation axis (120a) along an axial direction (2). The electric compressor (120) is arranged in the compressor housing section (112). The heater (130) comprises a heating element (132) and a coolant channel (134) including coolant ports (136). The control electronics (140) comprises a circuit board (142). The electric connectors (150) are electrically connected to the control electronics (140). The heater (130) and the control electronics (140) are arranged within the control housing section (114). The control housing section (114) is arranged axially adjacent to the compressor housing section (112). The coolant ports (136) and the electric connectors (150) are arranged at the control housing section (114) and are oriented in the same direction.

## Description

### Technical Field

The present disclosure relates to an electric compressor module for a thermal management system of an electric vehicle.

### Background

Thermal management systems have been widely used in various vehicle types for many years. A thermal management system usually employs a coolant circuit for cooling vehicle subsystems, and a refrigerant circuit for regulating the temperature of a vehicle cabin. The refrigerant circuit is usually driven by a compressor. The coolant circuit is usually driven by a pump. It is known to thermally couple the coolant circuit and refrigerant circuit via a heat exchanger. Electric vehicles which may encompass fully electric vehicles (EV), plug-in hybrid vehicles (PHEV), or hybrid vehicles (HEV) require a vehicle battery for powering the electric powertrain of the vehicle. One challenge of thermal management systems for electric vehicles is to regulate the temperature of the vehicle battery in all operating conditions including various different ambient conditions. For instance, at cold ambient temperatures, e.g., during winter, the temperature of the vehicle battery may not drop below a lower boundary operating temperature. Therefore, it is known to include an electric heater in the coolant circuit to which the vehicle battery is coupled in order to raise the battery temperature. Such additional electric heaters increase the complexity and size of thermal management systems.

The object of the present disclosure is to reduce the complexity and size of a thermal management system for an electric vehicle.

### Summary

The present disclosure relates to an electric compressor module for a thermal management system of an electric vehicle as defined in claim 1. The dependent claims depict advantageous embodiments of the present disclosure.

The present invention relates to an electric compressor module for a thermal management system of an electric vehicle. The electric compressor module comprises a housing, an electric compressor, a heater, control electronics and electric connectors. The housing includes a compressor housing section and a control housing section. The electric compressor has a rotation axis along an axial direction. The electric compressor is arranged in the compressor housing section. The heater comprises a heating element and a coolant channel including coolant ports. The control electronics comprises a circuit board. The electric connectors are electrically connected to the control electronics. The heater and the control electronics are arranged within the control housing section. The control housing section is arranged axially adjacent to the compressor housing section. The coolant ports and the electric connectors are arranged at the control housing section and are oriented in the same direction.

The disclosed electric compressor module which integrates the electric compressor of the refrigerant circuit with the heater of the coolant circuit leads to various advantageous technical effects.

First, by the integration of the electric compressor and the heater into one module, the size, weight and required installation space can be reduced. Furthermore, the number of required components and housing parts can be reduced as the control electronics and electric connectors can be used to supply power to and control both the heater and the electric compressor. Additionally, by integration of the heater into the control housing section a separate housing for the heater is obviated. Furthermore, the coolant can be used to cool the control electronics. One the other hand, waste heat from the control electronics can be used to preheat the coolant. This may increase the efficiency of the module and is particularly advantageous to preheat a vehicle battery of the electric vehicle at low ambient temperatures.

Second, by arranging all connectors (electric connectors and coolant ports) such that they are oriented in the same direction, the compactness of the electric compressor module and the thermal management system can be further reduced. Connection lines (e.g., power supply lines, coolant circuit lines) of the thermal management system which are to be connected to the connectors can all be fed and connected from the same orientation or direction. Therefore, the complexity of the connection line arrangement and feed can be vastly reduced, and the assembly of the thermal management system can be facilitated, compared to a device in which the connectors are oriented in different directions.

In summary, the disclosed electric compressor module may contribute to reduce the complexity and size of a thermal management system for an electric vehicle while increasing the efficiency.

In embodiments, the coolant ports and the electric connectors may be oriented axially towards the compressor housing section. In other words, the coolant ports and the electric connectors may be oriented such that they point in the axial direction towards the compressor housing section. Particularly, the coolant ports and the electric connectors may be oriented pointing in parallel directions. Generally the expression "being oriented in the same direction" may include slightly inclined orientations. For instance, inclinations of up to 15°, specifically inclinations of up to 10°, and more specifically inclinations of up to 5° with respect to the direction referred to may be encompassed. Thus, also slight deviations from the axial direction are encompassed by this disclosure. Arranging the coolant ports and the electric connectors such that they are oriented axially towards the compressor housing section is particularly advantageous. Thereby, the connection lines (e.g., power supply lines, coolant circuit lines) of the thermal management system which are to be connected to the connectors (electric connectors and coolant ports) can all be fed and connected towards the control housing section from a side of the compressor housing section. In other words the connection lines can be arranged radially above the compressor housing section and axially adjacent the control housing section. Thereby, the complexity of the connection line arrangement and feed can be vastly reduced, and the assembly of the thermal management system can be facilitated, compared to a device in which the connectors are oriented in different directions. In alternative embodiments, the coolant ports and the electric connectors may be oriented axially away from the compressor housing section. Particularly, the coolant ports and the electric connectors may be oriented pointing in parallel directions. In further alternative embodiments the coolant ports and the electric connectors may be oriented pointing in the radial direction. Particularly, the coolant ports and the electric connectors may be oriented pointing in parallel directions.

In embodiments, the electric compressor may be fluidically couplable to a refrigerant circuit of the thermal management system.

In embodiments, the coolant channel may be fluidically couplable to a coolant circuit of the thermal management system via the coolant ports.

In embodiments, the control housing section may have a base portion and a protruding portion. The base portion may be fixed to the compressor housing section. The protruding portion may extend radially outwards from the base portion radially beyond the compressor housing section. In embodiments, the coolant ports and the electric connectors may be arranged at the protruding portion. In embodiments, the circuit board may extend into the protruding portion. Particularly, the circuit board may extend radially into the protruding portion. In embodiments, the coolant channel may extend into the protruding portion. Particularly, the coolant channel may extend radially into the protruding portion.

In embodiments, the coolant ports may extend from the coolant channel axially beyond the circuit board. In embodiments, the coolant ports may be arranged circumferentially and/or radially outside the circuit board. In embodiments, the coolant channel may have an extended portion. The extended portion may extend circumferentially and/or radially outside the circuit board. In other words, the extended portion may extend orthogonally (i.e., circumferentially, and/or radially) with respect to the axial direction beyond the circuit board. The coolant ports extend axially beyond the circuit board from the extended portion. Alternatively, the coolant ports may comprise a bent section which extends from the coolant channel circumferentially and/or radially outside the circuit board and which may be bent to be oriented in the same direction as the electric connectors.

In embodiments, the coolant ports may axially extend from the coolant channel outside the control housing portion. Specifically, the coolant ports may axially extend from the coolant channel outside the protruding portion. The control housing section, specifically the protruding portion, may comprise a respective hole through which the ports extend. One common or a respective sealing may be arranged between the ports and the through hole(s) to prevent dust or dirt from entering the control housing section.

In embodiments, in which the coolant ports extend from the coolant channel axially beyond the circuit board, the circuit board may comprise an axial passage through which the coolant ports extend axially beyond the circuit board. In embodiments, one axial passage may be provided through which all coolant ports extends. In other embodiments, more than one axial passage may be provided, whereby each coolant port extends through a respective axial passage.

In embodiments which include the protruding portion, the protruding portion may at least partially protrude axially towards the compressor housing section thereby forming a recess within the control housing section. Specifically, the recess may be formed in the protruding portion. Particularly, the recess may extend axially beyond the base portion. In some embodiments, the recess may extend axially beyond the base portion and radially above the compressor housing section. These embodiments may lead to the advantage of placing bulky components of the electric compressor module such as electrical loads in the space of the recess. Therefore, the control housing section can be designed axially slimmer in the base portion. As the recess extends axially towards the compressor housing section, the total outer axial dimension of electric compressor module can be reduced.

In embodiments, the control electronics may comprise electrical loads, such as an inductive load and/or a capacitive load. In embodiments which include the recess, the electrical loads may be arranged in the recess. In other words, the inductive load and the capacitive load may be arranged radially 4 outside of the compressor housing section. Thereby the electrical loads may at least partially axially overlap with the compressor housing section. Axially overlap may be understood that there is at least one position on the axis at which both the compressor housing section and the electrical loads are arranged, when a plane which is orthogonal to the axis (e.g., by two different radial directions) is created at this position. In some embodiments, the coolant ports, the electric connectors, the inductive load, and/or the capacitive load may be at least partially arranged at the protruding portion in different areas when viewed at the protruding portion in an axial direction. In embodiments, the electrical loads may be attached to the control housing section via a thermal interface material. The thermal interface material may at least partially be arranged in the recess. Thereby, the electrical loads can be haltered in the control housing portion. Furthermore, the thermal interface material may conduct heat from the electrical loads away to the control housing portion. Thereby, the electrical loads may be cooled. The thermal interface material may be a thermal adhesive material, for example thermal adhesive AS 1802 ASS. The electrical loads may be also fixed to the circuit board. The circuit board may be attached to the control housing section for instance via bolts.

In embodiments, the circuit board may be arranged axially adj acent to the heater axially towards the compressor housing section. In other words, the circuit board may be arranged axially between the compressor housing section and the heater.

In embodiments, the circuit board may be arranged axially adj acent to the compressor housing section. The coolant channel may be arranged axially adjacent to the circuit board. The heating element may be arranged axially adjacent to the coolant channel. In other words, the coolant channel may be arranged axially between the circuit board and the heating element. As the coolant channel has a lower temperature during normal operation (e.g., 10-30 C°) than the temperature of the circuit board, particularly power electronics components (such as IGBT) of the circuit board (e.g., 50-80 C°), the coolant channel may enable cooling of the control electronics. On the other hand, the coolant in the coolant channel may be additionally heated by the waste heat of the control electronics. This is particularly advantageous at low ambient temperatures (e.g. during winter with temperatures even below 0 C°), because the power electronics can help to heat-up the coolant in order to bring components of the electric vehicle, such as the vehicle battery, to operating temperature. The arrangement of the circuit board, particularly the power electronics components, axially adjacent to the coolant channel may increase the heat exchange between the coolant channel and the control electronics.

In embodiments, a heat conduction material may be arranged axially between the control electronics and the coolant channel. In embodiments, the heat conduction material may be electrically insulating.

In embodiments, the coolant ports may comprise an inlet port and an outlet port. In embodiments, the inlet port and the outlet port may be configured as spigots. The inlet port and the outlet port may axially extend from the coolant channel outside the control housing section, specifically outside the protruding portion. The control housing section, specifically the protruding portion, may comprise respective one or two holes through which the coolant ports may extend. A respective sealing may be arranged between the coolant ports and the through hole(s) to prevent dust or dirt from entering the control housing section. In embodiments, during operation of electric compressor module, coolant may be configured to travel from the inlet port though the coolant channel to the outlet port. In embodiments the coolant channel may comprise one or more flow guiding elements, such as ribs or ribbon-shaped elements. In embodiments the coolant may, for instance, comprise water and/or glycol. In some embodiments a water-glycol mixture, e.g., 50%/50% may be employed. The coolant channel may act as heat exchanger, and therefore may also be denoted a heat exchanger coolant channel.

In embodiments, the coolant channel may be formed by a sheet metal housing. In some embodiments, a wall thickness of the sheet metal housing may be between 0,5mm (including) to 3mm (including). In some embodiments, a wall thickness of the sheet metal housing may be between 0,5mm (including) and 2mm (including). Specifically, a wall thickness of the sheet metal housing may be between 0,5mm (including) and 1,5mm (including). In some embodiments, the sheet metal housing may be made of a material comprising aluminum or an aluminum alloy. Thereby, a good heat conduction may be provided, and the heat exchanger function of the coolant channel may be improved.

In embodiments, the sheet metal housing may comprise two sheet metal housing parts which are brazed or welded together. Between the two sheet metal housing parts, the coolant channel may be formed. In exemplary configurations, a path of the coolant channel may be formed by respective protrusions in one or both sheet metal housing parts. In embodiments, the protrusions may be deep drawn in the housing part(s) or formed by flow guiding elements, such as ribs or ribbon-shaped elements. The flow guiding elements may be brazed and/or welded to one or both sheet metal housing parts. The flow guiding elements may be made of the same material as the sheet metal housing parts.

In embodiments, the coolant ports may be brazed or welded to the coolant channel. Thereby a fluidically self-contained coolant channel may be provided which can be arranged in the control housing portion with highly reduced risk of leakage (and highly reduced risk of potential damage of the control electronics). As the coolant ports extend to the outside of the control housing portion, the need for additional coolant sealings is obviated.

In embodiments, the heating element may be arranged on an outside surface of the coolant channel. The outside surface may be directed axially away from the compressor housing section.

In embodiments, the heating element may comprise a conductive layer which is applied on an outside surface of the coolant channel. The outside surface may be directed axially away from the compressor housing section. The conductive layer may for instance comprise conductor tracks which may be arranged in a pattern.

In some embodiments, the heating element may be a resistance heating element. Particularly, the heating element may be a high-voltage resistance heating element.

In embodiments, the control electronics may be configured to control both the heating element and the electric compressor. The control electronics is electrically coupled to the heating element and the electric compressor.

In embodiments, the electric connectors may comprise a high-volt connector and a low-volt connector. The high-volt connector may be configured to provide power to the heater and the electric compressor. The low-volt connector may be configured to provide control signals to the control electronics.

### Brief Description of the Drawings

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **FIG. 1a**: Shows a schematical simplified first exemplary configuration of the electric compressor module in a front view as seen in the axial direction;
- **FIG. 1b**: Shows a partial side cut view of the electric compressor module of Fig. 1a;
- **FIG. 2a**: Shows a schematical simplified second exemplary configuration of the electric compressor module in a front view as seen in the axial direction;
- **FIG. 2b**: Shows a partial side cut view of the electric compressor module of Fig. 2a;
- **FIG. 3a**: Shows a third exemplary configuration of the electric compressor module in a front view as seen in the axial direction;
- **FIG. 3b**: Shows a partial side cut view of the electric compressor module of Fig. 3a.

### Detailed Description

Embodiments of the electric compressor module according to the present disclosure will be described in reference to the drawings as follows.

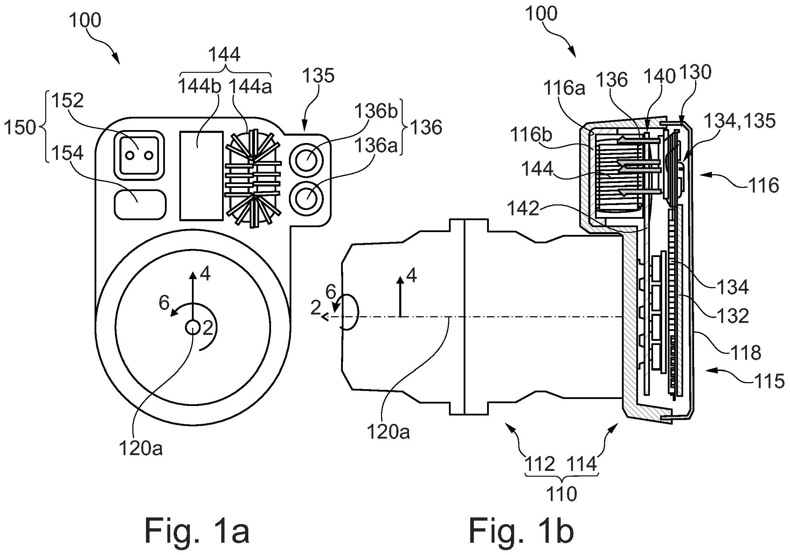

In the context of this application, the expression axial, axially or axial direction may refer to a rotation axis 120a of the electric compressor 120. With respect to the figures the axial direction is denoted by reference sign 2. The expression radial, radially or radial direction is to be understood relative to the axis/axial direction 2 of the electric compressor 120 and is denoted with the reference sign 4. The expression circumferential, circumferentially, or circumferential direction is to be understood relative to the axis/axial direction 2 of the electric compressor 120 and is denoted with the reference sign 6. It should be understood that although one respective exemplary direction is shown in the respective figures, the respective counter direction also falls under the respective expression. For instance, Fig. 1a shows the circumferential direction 6 by a counterclockwise oriented arrow. However, a direction clockwise around the axis 2, may also be denoted the circumferential direction 6.

As generally shown in **Fig. 1a, 1b****,** **2a, 2b****,** **3a, and 3b****,** the present invention relates to an electric compressor module 100 for a thermal management system of an electric vehicle. The electric compressor module 100 comprises a housing 110, an electric compressor 120, a heater 130, control electronics 140 and electric connectors 150. The housing 110 includes a compressor housing section 112 and a control housing section 114. The electric compressor 120 has a rotation axis 120a along an axial direction 2. The electric compressor 120 is arranged in the compressor housing section 112. The heater 130 comprises a heating element 132 and a coolant channel 134 including coolant ports 136. The control electronics 140 comprises a circuit board 142. The electric connectors 150 are electrically connected to the control electronics 140. The heater 130 and the control electronics 140 are arranged within the control housing section 114. The control housing section 114 is arranged axially adjacent to the compressor housing section 112. The coolant ports 136 and the electric connectors 150 are arranged at the control housing section 114 and are oriented in the same direction.

In this regard, "being oriented in the same direction" may be understood such that the coolant ports 136 and the electric connectors 150 are pointing in the same direction. In the three exemplary configurations shown, the coolant ports 136 and the electric connectors 150 are oriented in the axial direction 2. In other words, the coolant ports 136 and the electric connectors 150 are pointing in the axial direction 2. With respect to the coolant ports 136 and the electric connectors 150 are pointing in the axial direction 2 it should be understood that the coolant ports 136 and the electric connectors 150 are not arranged on the rotation axis 120a but parallel thereto. It should be understood that in other embodiments, the coolant ports 136 and the electric connectors 150 may generally be oriented in the axial direction 2 or in a direction parallel to the radial direction 4. In embodiments in which the coolant ports 136 and the electric connectors 150 are oriented in a direction parallel to the radial direction 4, the coolant ports 136 and the electric connectors 150 are oriented in the same direction but parallel to each other.

In the embodiments shown in **Fig. 1a, 1b****,** **2a, 2b****,** **3a, and 3b** **the** coolant ports 136 and the electric connectors 150 are oriented axially towards the compressor housing section 112. In other words, the coolant ports 136 and the electric connectors 150 may be oriented such that they point in the axial direction 2 towards the compressor housing section 112. For instance, as shown in **Fig. 1a****,** **2a****, and** **3a** the coolant ports 136 and the electric connectors 150 point in the axial direction 2 towards the viewer. As shown in **Fig. 1b****,** **2b****, and** **3b** the coolant ports 136 and the electric connectors 150 point in the axial direction 2 to the left.

Generally the expression "being oriented in the same direction" may include slightly inclined orientations. For instance, inclinations of up to 15°, specifically inclinations of up to 10°, and more specifically inclinations of up to 5° with respect to the direction referred to may be encompassed. Thus, also slight deviations from the axial direction are encompassed by this disclosure. Arranging the coolant ports 136 and the electric connectors 150 such that they are oriented axially towards the compressor housing section 112 is particularly advantageous. Thereby, the connection lines (e.g., power supply lines, coolant circuit lines) of the thermal management system which are to be connected to the connectors (electric connectors 150 and coolant ports 136) can all be fed and connected towards the control housing section 114 from a side of the compressor housing section 112. In other words the connection lines can be arranged radially 4 above the compressor housing section 112 and axially adjacent the control housing section 114. Thereby, the complexity of the connection line arrangement and feed can be vastly reduced, and the assembly of the thermal management system can be facilitated, compared to a device in which the connectors are oriented in different directions.

In alternative embodiments, the coolant ports 136 and the electric connectors 150 may be oriented axially away from the compressor housing section 112. For instance, the coolant ports 136 and the electric connectors 150 may be arranged and oriented pointing to the right side in **Fig. 1b****,** **2b****, and** **3b****.** Particularly, the coolant ports 136 and the electric connectors 150 may be oriented pointing in parallel directions. In further alternative embodiments the coolant ports 136 and the electric connectors 150 may be oriented pointing in the radial direction 4 or a direction parallel to the radial direction 4. Particularly, the coolant ports 136 and the electric connectors 150 may be oriented pointing in parallel directions. For instance, the coolant ports 136 and the electric connectors 150 may be arranged and oriented pointing upwards and away from the control housing section 114 in **Fig. 1b****,** **2b****, and** **3b**

The disclosed electric compressor module 100 which integrates the electric compressor 120 of the refrigerant circuit with the heater 130 of the coolant circuit leads to various advantageous technical effects.

First, by the integration of the electric compressor 120 and the heater 130 into one module, the size, weight and required installation space can be reduced. Furthermore, the number of required components and housing parts can be reduced as the control electronics 140 and the electric connectors 150 can be used to supply power to and control both the heater 130 and the electric compressor 120. Additionally, by integration of the heater 130 into the control housing section 112 a separate housing for the heater 130 is obviated. Furthermore, on the one hand the coolant can be used to cool the control electronics 140. One the other hand, waste heat from the control electronics 140 can be used to preheat the coolant. This may increase the efficiency of the module 100 and is particularly advantageous to preheat a vehicle battery of the electric vehicle at low ambient temperatures.

Second, by arranging all connectors (electric connectors 150 and coolant ports 136) such that they are oriented in the same direction, the compactness of the electric compressor module 100 and the thermal management system can be further reduced. Connection lines (e.g., power supply lines, coolant circuit lines) of the thermal management system which are to be connected to the connectors 136, 150 can all be fed and connected from the same orientation or direction. Therefore, the complexity of the connection line arrangement and feed can be vastly reduced, and the assembly of the thermal management system can be facilitated, compared to a device in which the connectors are oriented in different directions.

In summary, the disclosed electric compressor module 100 may contribute to reduce the complexity and size of a thermal management system for an electric vehicle while increasing the efficiency.

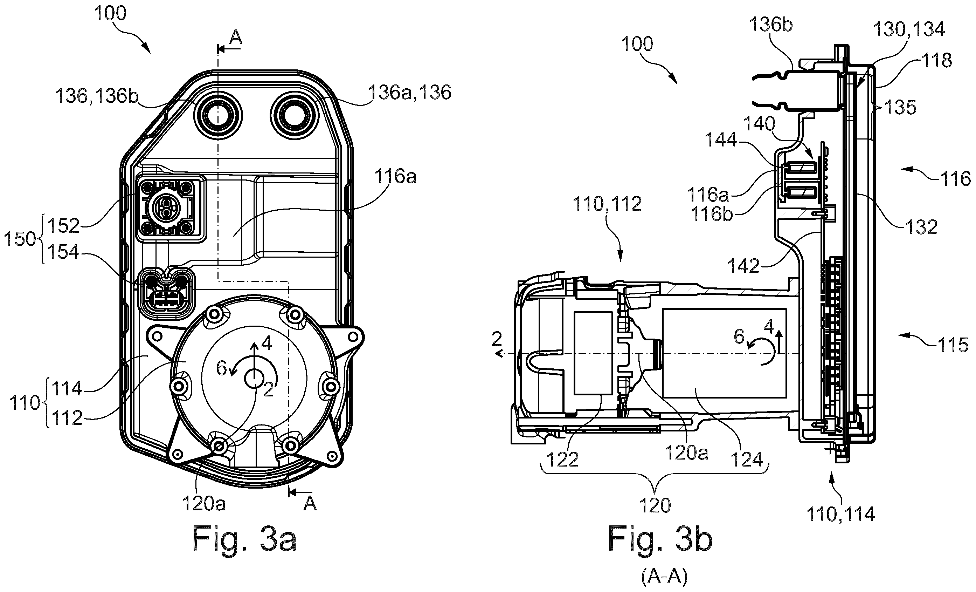

As shown schematically in **Fig. 3b****,** the electric compressor 120 may comprise a compressor wheel 122 and an electric motor 124. In some embodiments, the electric motor 124 may be a high voltage motor. For instance, the electric motor 124 may be operable with at least 240V. In some embodiments, the electric motor 124 may be operable with 240V to 950V. The electric motor 124 may comprise a rotor and a stator. The stator may be electrically coupled to the control electronics 140. The control electronics 140 may be configured to control the electric compressor. Particularly, the control electronics 140 may be configured to control the electric motor 124, more specifically, to control the stator to drive the rotor. The rotor may be coupled to the compressor wheel 122 such that when the rotor rotates, the compressor wheel 122 is also rotating. The compressor housing section 112 may comprise a compressor wheel housing portion with a refrigerant inlet and a refrigerant outlet (not shown in the figures). The compressor wheel 122 may compress refrigerant coming from the refrigerant inlet and push compressed refrigerant out of the refrigerant outlet. The electric compressor 120 is fluidically couplable to a refrigerant circuit of the thermal management system. For instance, the electric compressor 120 may be fluidically couplable to the refrigerant circuit of the thermal management system via the refrigerant inlet and the refrigerant outlet. The compressor housing section 112 may be generally cylindrical along the rotation axis 120a with a first axial end and a second axial end. As shown in **Fig. 3b****,** the compressor wheel 122 and the electric motor 124 may be arranged axially adjacently in the compressor housing section 112. As shown, the compressor wheel 122 and the electric motor 124 may be arranged in respective sub portions of the compressor housing section 112.

Axially adjacent to the compressor housing section 112, the control housing section 114 is arranged. Specifically, the control housing section 114 is arranged adjacently to one of the axial ends of the compressor housing section 112. Advantageously, the control housing section 114 is arranged adjacently to that axial end of the compressor housing section 112 which is closer to the electric motor 124 (see, **Fig. 3b****).**

As shown in **Fig. 1a, 1b****,** **2a, 2b****,** **3a, and 3b****,** the control housing section 114 may be generally plate shaped and/or rectangularly shaped. The control housing section 114 may extend substantially orthogonal to the control housing section 112. More specifically, the control housing section 114 may extend substantially orthogonally to the rotation axis 120a. The control housing section 114 may have an axial width, a radial length, and a radial width. The axial width may be substantially smaller, e.g. at least by factor 2 or 3, than the radial length and/or the radial width. The radial length and the radial width may be understood as extensions of the control housing section 114 extending orthogonally to each other and orthogonally to the rotation axis 120a. In some embodiments the radial length may be larger, e.g., by at least factor 2, than the radial width. In **Fig. 1a****,** **2a****, and** **3a** the radial length may extend in the vertical direction and radial width may extend in the horizonal direction. The axial width may extend in the horizontal direction in **Fig. 1b****,** **2b****, and** **3b****.**

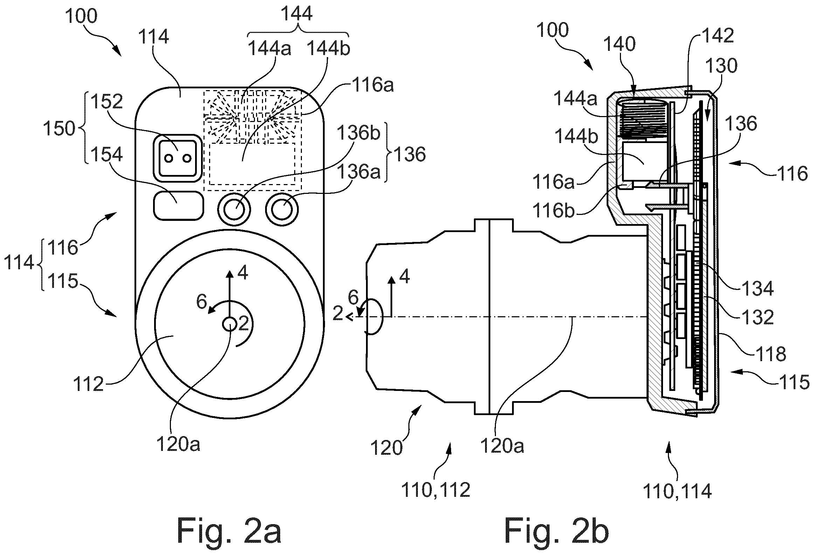

The control housing section 114 may have a base portion 115 and a protruding portion 116. The base portion 115 may be fixed to the compressor housing section 112. The protruding portion 116 may extend radially 4 outwards from the base portion 115 radially 4 beyond the compressor housing section 112. Particularly, the protruding portion 116 may extend in the direction of the radial length of the control housing section 114 (see, **Fig. 1a****,** **2a**). In some embodiments, the protruding portion 116 may extend in the direction of the radial length and the radial width of the control housing section 114 (see, **Fig. 3a****).** The protruding portion 116 is arranged radially beyond the cylindrical compressor housing section 112.

As best seen in **Fig. 1a****,** **2a****, and** **3a** the coolant ports 136 and the electric connectors 150 may be arranged at the protruding portion 116. Furthermore, as best seen in **Fig. 1b****,** **2b****, and** **3b** the circuit board 142 and the coolant channel 134 may extend into the protruding portion 116. Particularly, the circuit board 142 and the coolant channel 134 may extend radially into the protruding portion 116.

With reference to **Fig. 1b****,** **2b****, and** **3b****,** the circuit board 142 may be arranged axially adjacent to the compressor housing section 112. The circuit board 142 may be arranged axially adjacent to the heater 130 axially towards the compressor housing section 112. In other words, the circuit board 142 may be arranged axially between the compressor housing section 112 and the heater 130. The coolant channel 134 may be arranged axially adjacent to the circuit board 142. The heating element 132 may be arranged axially adjacent to the coolant channel 134. In other words, the coolant channel 134 may be arranged axially between the circuit board 142 and the heating element 132. As the coolant channel 134 has a lower temperature during normal operation (e.g., 10-30 C°) than the temperature of the circuit board 142, particularly power electronics components (such as IGBT) of the circuit board 142 (e.g., 50-80 C°), the coolant channel 134 may enable cooling of the control electronics 140. On the other hand, the coolant in the coolant channel 134 may be additionally heated by the waste heat of the control electronics 140. This is particularly advantageous at low ambient temperatures (e.g. during winter with temperatures even below 0 C°), because the power electronics 140 can help to heat-up the coolant in order to bring components of the electric vehicle, such as the vehicle battery, to operating temperature. The arrangement of the circuit board 142, particularly the power electronics components, axially adjacent to the coolant channel 134 may increase the heat exchange between the coolant channel 134 and the control electronics 140. In some embodiments, a heat conduction material may be arranged axially between the control electronics 142 and the coolant channel 134. This may further increase the heat exchange between the control electronics 142 and the coolant channel 134. In embodiments, the heat conduction material may be electrically insulating.

The control electronics 140 is configured to control both the heating element 134 and the electric compressor 122. The control electronics 140 is electrically coupled to the heating element 134 and the electric compressor 122. The control electronics 140 may comprise electrical loads 144. The electrical loads 144 may include an inductive load 144a and/or a capacitive load 144b. The electrical loads 144 are electrically connected to the circuit board 142. The electric connectors 150 may comprise a high-volt connector 152 and a low-volt connector 154. The high-volt connector 152 may be configured to provide power to the heater 130 and to the electric compressor 120. The low-volt connector 154 may be configured to provide control signals to the control electronics 140.

The coolant channel 134 may be fluidically couplable to a coolant circuit of the thermal management system via the coolant ports 136. The coolant ports 136 extend from the coolant channel 134 to the outside of the control housing section 114. The coolant ports 136 may comprise an inlet port 136a and an outlet port 136b (see, **Figs. 1a****,** **2a****, and** **3a****).** In embodiments, the inlet port 136a and the outlet port 136b may be configured as spigots. The inlet port 136a and the outlet port 136b may axially extend from the coolant channel 134 outside the control housing section 114, specifically outside the protruding portion 116. The control housing section 114, specifically the protruding portion 116, may comprise a respective holes through which the coolant ports 136 may extend. In some embodiments, respective sealing may be arranged between the coolant ports 136 and the through hole(s) to prevent dust or dirt from entering the control housing section 114. In embodiments, during operation of electric compressor module 100, coolant may be configured to travel from the inlet port 136a though the coolant channel 134 to the outlet port 136b. In embodiments the coolant channel 134 may comprise one or more flow guiding elements, such as ribs or ribbon-shaped elements. In embodiments the coolant may, for instance, comprise water and/or glycol. In some embodiments a water-glycol mixture, e.g., 50%/50% may be employed. The coolant channel 134 may act as heat exchanger, and therefore may also be denoted a heat exchanger coolant channel 134. Particularly, the coolant channel 134 may be configured for heat exchange between the coolant and the control electronics 140 on one side, and the heating element 132 on the other side.

In specifically advantageous configurations, the coolant channel 134 may be formed by a sheet metal housing. In some embodiments, a wall thickness of the sheet metal housing may be between 0,5mm (including) to 3mm (including). In some embodiments, a wall thickness of the sheet metal housing may be between 0,5mm (including) and 2mm (including). Specifically, a wall thickness of the sheet metal housing may be between 0,5mm (including) and 1,5mm (including). In some embodiments, the sheet metal housing may be made of a material comprising aluminum or an aluminum alloy. Thereby, a good heat conduction may be provided and the heat exchanger function of the coolant channel 134 may be improved.

As best seen in **Fig. 3b****,** the sheet metal housing may comprise two sheet metal housing parts which are brazed or welded together. Between the two sheet metal housing parts, the coolant channel 134 may be formed. In exemplary configurations, a path of the coolant channel 134 may be formed by respective protrusions in one or both sheet metal housing parts. In embodiments, the protrusions may be deep drawn in the housing part(s) or formed by flow guiding elements, such as ribs or ribbon-shaped elements. The flow guiding elements may be brazed and/or welded to one or both sheet metal housing parts. The flow guiding elements may be made of the same material as the sheet metal housing parts. The coolant ports 136 may be brazed or welded to the coolant channel 134 (see, exemplary outlet port 136b in **Fig. 3b****).**The coolant ports 136 may be sheet metal parts. In some embodiments, the coolant ports 136 may be made from the same material, e.g., aluminum based, as the sheet metal housing. It is to be understood that the sheet metal housing has two respective openings at which the coolant ports 136 are attached to form the coolant channel 136 for insertion into the control housing section 114. In **Fig. 3b****,** the left sheet metal housing part has these holes included. Thereby a fluidically self-contained coolant channel may be provided which can be arranged in the control housing portion 114 with highly reduced risk of leakage (and highly reduced risk of potential damage of the control electronics). As the coolant ports 136 extend to the outside of the control housing portion 114, the need for additional coolant sealings is obviated. In some embodiments, the sheet metal housing may act as cover for the control housing section 114. In other embodiments, as shown, e.g., in **Fig. 1b****,** **2b****, and** **3b****,** a control housing cover 118 may be provided to close the control housing 114 with the heater 130 inside. In some embodiments, the sheet metal housing may be flanged between control housing section 114 and the cover 118 (see, e.g., **Fig. 3b****).**

With reference to **Fig. 1b****,** **2b****, and** **3b****,** the heating element 132 may be arranged on an outside surface of the coolant channel 134. The heating element 132 may be electrically coupled to the control electronics 140. The outside surface may be directed axially away from the compressor housing section 112. Specifically, the heating element 132 may be arranged on an outside surface on one of the sheet metal housing parts. In preferred embodiments, the heating element 132 may comprise or be a conductive layer. The conductive layer may be applied on the outside surface of the coolant channel 134. The conductive layer may, for instance, comprise conductor tracks which may be arranged in a pattern. In some embodiments, the heating element 132 may be a resistance heating element. Particularly, the heating element 132 may be a high-voltage resistance heating element 132. In some embodiments, the heating element 132 may be operable with at least 240V. In some embodiments, the heating element 132 may be operable with 240V to 950V.

With further reference to **Fig. 1a, 1b****,** **2a, 2b****,** **3a, and 3b****,** the protruding portion 116 may at least partially protrude axially towards the compressor housing section 112. Thereby an axial recess 116a may be formed within the control housing section 114 (see, particularly, **Fig. 1b****,** **2b****, and** **3b****).** Specifically, the recess 116a is formed in the protruding portion 116. Particularly, the recess 116a may extend axially beyond the base portion 115. In some embodiments, the recess 116a may extend axially beyond the base portion 115 and radially above the compressor housing section 112 (see, **Fig. 1b****,** **2b****, and** **3b****).** The electrical loads 144 may be arranged in the recess 116a. In other words, the electrical loads 144 may be arranged radially 4 outside of the compressor housing section 112. Thereby the electrical loads 144 may at least partially axially overlap with the compressor housing section 112. Axially overlap may be understood that there is at least one position on the axis 120a at which both the compressor housing section 112 and the electrical loads 144 are arranged, when a plane which is orthogonal to the axis 120a (e.g. defined by two different radial directions 4) is created at this position on the axis 120a. These embodiments may lead to the advantage of placing bulky components of the electric compressor module 100 such as electrical loads 144 in the space of the recess 116a. Therefore, the control housing section 114 can be designed axially slimmer in the base portion 115. As the recess 116a extends axially towards the compressor housing section 112, the total outer axial dimension of electric compressor module 100 can be reduced. As shown in **Fig. 1b****,** **2b****, and** **3b****,** the recess 116a extends radially 4 above the compressor housing section 112, thereby efficiently using space which is shared with connection lines (power supply, coolant circuit). In embodiments, the electrical loads 144 may be attached to the control housing section 114 via a thermal interface material 116b. The thermal interface material 116b may at least partially be arranged in the recess 116a. Thereby, the electrical loads 144 can be haltered in the control housing portion 114. Furthermore, the thermal interface material 116b may conduct heat from the electrical loads 144 away to the control housing portion 114. Thereby, the electrical loads 144 may be cooled. The thermal interface material 116b may be a thermal adhesive material, for example thermal adhesive AS 1802 ASS. The electrical loads 144 may be also fixed to the circuit board 142. The circuit board 142 may be attached to the control housing section 114, for instance, via screws.

Generally, the coolant ports 136, the electric connectors 150, the inductive load 144a and/or the capacitive load 144b may be at least partially arranged at the protruding portion 116 in different areas when viewed at the protruding portion 116 in an axial direction 2. In that regard, **Fig. 1a****/b,** **Fig. 2a****/b, and** **Fig. 3a****/b** show three exemplary configurations.

All exemplary configurations have in common that the coolant ports 136, the electric connectors 150, and electrical loads 144 are arranged towards the same axial side of the control housing section 114, specifically towards the axial side of the control housing section 114 which points axially towards the compressor housing section 112. Particularly, the coolant ports 136 and the electric connectors 150 are oriented in the same direction. More specifically, the coolant ports 136 and the electric connectors 150 are oriented in the same axial direction 2 towards the compressor housing section 112.

Furthermore, all exemplary configurations have in common that the coolant ports 136 may extend from the coolant channel 134 axially beyond the circuit board 142. Extending axially beyond (the circuit board 142) may be understood to extend from one axial side (of the circuit board 142) to an opposite side (of the circuit board 142). In more detail the coolant ports 136 may extend from the coolant channel 134 axially beyond the circuit board 142 and axially outside of the control housing section 114. This is best seen in Fig. 3b while **Figs. 1b** **and** **2b** only depict simplified schematic figures. However, it is to be understood that also in the embodiments of **Figs. 1b** **and** **2b****,** the coolant ports 136 extend axially outside the control housing section 114. Expressed in other words, the coolant ports 136 extend from the coolant channel 134 axially beyond the circuit board 142 and further axially beyond or through an outer housing wall of the control housing section 114. More generally, the coolant ports 136 may axially extend from the coolant channel 134 outside the control housing portion 116. Specifically, the coolant ports 136 may axially extend from the coolant channel 134 outside the protruding portion 116. The control housing section 114, specifically the protruding portion 116, may comprise a respective hole through which the ports 136 extend. In some embodiments, one common or a respective sealing may be arranged between the ports 136 and the through hole(s) to prevent dust or dirt from entering the control housing section 114. In other embodiments, the coolant ports 136 and the hole(s) in the control housing section 114 may be sized to form, e.g., a press-fit.

In the exemplary configuration of **Fig. 1a and 1b****,** the coolant ports 136 are arranged outside the circuit board 142 in a radial width direction of the control housing section 114. Expressed more generally, the coolant ports 136 are arranged outside the circuit board 142 in a direction orthogonal to the rotation axis 120a. Further alternatively described, the coolant ports 136 may be arranged circumferentially 6 and/or radially 4 outside the circuit board 142. In this embodiment, the coolant channel 134 may comprise an extended portion 135. The extended portion 135 may extend orthogonally (i.e., circumferentially 6 and/or radially 4) with respect to the axial direction 2 beyond the circuit board 142. In the shown example, the extended portion 135 extends beyond the circuit board 142 in a direction of the radial width of the control housing section 114. The coolant ports 136 extend axially beyond the circuit board 142 from the extended portion 135. The coolant ports 136 are oriented in the axial direction 2 (towards the compressor housing section 112). The electric connectors 150 are also arranged being oriented in the axial direction 2 (towards the compressor housing section 112). The electrical loads 144 are arranged in the recess 116b of the protruding portion 116. Specifically, the electrical loads 144 are arranged on an axial side of the circuit board 142 which points in the axial direction 2 towards the compressor housing section 112. Exemplary, the inlet port 136a and the outlet port 136b are arranged adjacently to each other in a direction of the radial length of the control housing section 114. Exemplary, the high-volt connector 152 and the low-volt connector 154 are arranged adjacently to each other in a direction of the radial length of the control housing section 114. The coolant ports 136, the electrical loads 144, and the electrical connectors 150 are arranged adjacently in a direction of the radial width of the control housing section 114.

In the exemplary configuration of **Fig. 3a and 3b****,** the coolant ports 136 are also arranged outside the circuit board 142 in a direction orthogonal to the rotation axis 120a. More specifically, the coolant ports 136 are arranged outside the circuit board 142 in a radial length direction of the control housing section 114. Further alternatively described, the coolant ports 136 may be arranged circumferentially 6 and/or radially 4 outside the circuit board 142. In this embodiment, the coolant channel 134 may comprise an extended portion 135. The extended portion 135 may extend orthogonally (i.e., circumferentially 6 and/or radially 4) with respect to the axial direction 2 beyond the circuit board 142. In the shown example, the extended portion 135 extends beyond the circuit board 142 in a direction of the radial length of the control housing section 114. The coolant ports 136 extend axially beyond the circuit board 142 from the extended portion 135. The coolant ports 136 are oriented in the axial direction 2 (towards the compressor housing section 112). The electric connectors 150 are also arranged being oriented in the axial direction 2 (towards the compressor housing section 112). The electrical loads 144 are arranged in the recess 116b of the protruding portion 116. Specifically, the electrical loads 144 are arranged on an axial side of the circuit board 142 which points in the axial direction 2 towards the compressor housing section 112. Exemplary, the inlet port 136a and the outlet port 136b are arranged adjacently to each other in a direction of the radial width of the control housing section 114. Exemplary, the high-volt connector 152 and the low-volt connector 154 are arranged adjacently to each other in a direction of the radial length of the control housing section 114. The coolant ports 136 are arranged adjacently to the electrical loads 144 and the electrical connectors 150 in a direction of the radial length of the control housing section 114. The electrical loads 144 and the electrical connectors 150 are arranged adjacently in a direction of the radial width of the control housing section 114.

In embodiments alternatively to the extended portion 135, the coolant ports 136 may comprise a bent section which extends from the coolant channel 134 circumferentially 6 and/or radially 4 outside the circuit board 142 and which may be bent to be oriented in the same direction as the electric connectors 150, e.g. in the axial direction 2.

In the exemplary configuration of **Fig. 2a and 2b****,** the circuit board 142 may comprise an axial passage 143 through which the coolant ports 136 extend axially beyond the circuit board 142. In embodiments, one axial passage may be provided through which all coolant ports 136 extends. In other embodiments, more than one axial passage may be provided, whereby each coolant port 136a, 136b extends through a respective axial passage. The coolant ports 136 extend axially though the circuit board 142 from the coolant channel 134. The coolant ports 136 are oriented in the axial direction 2 (towards the compressor housing section 112). The electric connectors 150 are also arranged being oriented in the axial direction 2 (towards the compressor housing section 112). The electrical loads 144 are arranged in the recess 116b of the protruding portion 116. Specifically, the electrical loads 144 are arranged on an axial side of the circuit board 142 which points in the axial direction 2 towards the compressor housing section 112. Exemplary, the inlet port 136a and the outlet port 136b are arranged adjacently to each other in a direction of the radial width of the control housing section 114. Exemplary, the high-volt connector 152 and the low-volt connector 154 are arranged adjacently to each other in a direction of the radial length of the control housing section 114. The coolant ports 136 are arranged adjacently to the electrical loads 144 a direction of the radial length of the control housing section 114. The electrical loads 144 are arranged adjacently to the coolant ports 136 and the electrical connectors 150 in a direction of the radial width of the control housing section 114. The coolant ports 136 are arranged in the protruding portion 116 closer to the base portion 115 than the electrical loads 144.

Although the present invention has been described above and is defined in the attached claims, it should be understood that the invention may alternatively be defined in accordance with the following embodiments:
1. Electric compressor module (100) for a thermal management system of an electric vehicle, the electric compressor module (100) comprising:
   a housing (110) including a compressor housing section (112) and a control housing section (114);
   an electric compressor (120) having a rotation axis (120a) along an axial direction (2), the electric compressor (120) being arranged in the compressor housing section (112);
   a heater (130) comprising a heating element (132) and a coolant channel (134) including coolant ports (136);
   control electronics (140) comprising a circuit board (142);
   electric connectors (150) which are electrically connected to the control electronics (140);
   wherein the heater (130) and the control electronics (140) are arranged within the control housing section (114),
   wherein the control housing section (114) is arranged axially adjacent to the compressor housing section (112), and
   wherein the coolant ports (136) and the electric connectors (150) are arranged at the control housing section (114) and are oriented in the same direction.
2. Electric compressor module (100) of embodiment 1, wherein the coolant ports (136) and the electric connectors (150) are oriented axially towards the compressor housing section (112).
3. Electric compressor module (100) of any one of the preceding embodiments, wherein the electric compressor (120) is fluidically couplable to a refrigerant circuit of the thermal management system.
4. Electric compressor module (100) of any one of the preceding embodiments, wherein the coolant channel (134) is fluidically couplable to a coolant circuit of the thermal management system via the coolant ports (136).
5. Electric compressor module (100) of any one of the preceding embodiments, wherein the control housing section (114) has a base portion (115) fixed to the compressor housing section (112), and a protruding portion (116) which extends radially (4) outwards from the base portion (115) radially (4) beyond the compressor housing section (112).
6. Electric compressor module (100) of embodiment 5, wherein the coolant ports (136) and the electric connectors (150) are arranged at the protruding portion (116).
7. Electric compressor module (100) of any one of embodiments 5 or 6, wherein the circuit board (142) and/or the coolant channel (134) extend into the protruding portion (116).
8. Electric compressor module (100) of any one of the preceding embodiments, wherein the coolant ports (136) extend from the coolant channel (134) axially beyond the circuit board (142).
9. Electric compressor module (100) of embodiment 8, wherein the coolant ports (136) are arranged circumferentially (6) and/or radially (4) outside the circuit board (142).
10. Electric compressor module (100) of embodiment 9, wherein the coolant channel (134) has an extended portion (135) which extends circumferentially (6) and/or radially (4) outside the circuit board (142), and wherein the coolant ports (136) extend axially beyond the circuit board (142) from the extended portion (135).
11. Electric compressor module (100) of embodiment 8, wherein the circuit board (142) comprises an axial passage (143) through which the coolant ports (136) extend axially beyond the circuit board (142).
12. Electric compressor module (100) of any one of the preceding embodiments if at least dependent on embodiment 5, wherein the protruding portion (116) at least partially protrudes axially towards the compressor housing section (112) thereby forming a recess (116a) within the control housing section (114).
13. Electric compressor module (100) of embodiment 12, wherein the control electronics (140) comprise electrical loads (144), such as an inductive load (144a) and a capacitive load (144b), which are arranged in the recess (116a).
14. Electric compressor module (100) of embodiment 13, wherein the electrical loads (144) are attached to the control housing section (114) via a thermal interface material (116b) which is at least partially arranged in the recess (116a).
15. Electric compressor module (100) of any one of the preceding embodiments, wherein the circuit board (142) is arranged axially adjacent to the heater (130) axially towards the compressor housing section (112).
16. Electric compressor module (100) of any one of the preceding embodiments, wherein the circuit board (142) is arranged axially adjacent to the compressor housing section (112), wherein the coolant channel (134) is arranged axially adjacent to the circuit board (142), and wherein the heating element (132) is arranged axially adjacent to the coolant channel (134) such that the coolant channel (134) is arranged axially between the circuit board (142) and the heating element (132).
17. Electric compressor module (100) of any one of the preceding embodiments, wherein a heat conduction material is arranged axially between the control electronics (142) and the coolant channel (134).
18. Electric compressor module (100) of any one of the preceding embodiments, wherein the coolant ports (136) comprise an inlet port (136a) and an outlet port (136b).
19. Electric compressor module (100) of embodiment 18, wherein, during operation, coolant is configured to travel from the inlet port (136a) though the coolant channel (134) to the outlet port (136b).
20. Electric compressor module (100) of any one of the preceding embodiments, wherein the coolant channel (134) is formed by a sheet metal housing.
21. Electric compressor module (100) of embodiment 20, wherein the sheet metal housing is made of a material comprising aluminum or an aluminum alloy.
22. Electric compressor module (100) of any one of embodiments 20 or 21, wherein the sheet metal housing comprises two sheet metal housing parts which are brazed or welded together.
23. Electric compressor module (100) of any one of embodiments, wherein the coolant ports (136) are brazed or welded to the coolant channel (134).
24. Electric compressor module (100) of any one of the preceding embodiments, wherein the heating element (132) is arranged on an outside surface of the coolant channel (134), the outside surface being directed axially away from the compressor housing section (112).
25. Electric compressor module (100) of any one of the preceding embodiments, wherein the heating element (132) comprises a conductive layer which is applied on an outside surface of the coolant channel (134), the outside surface being directed axially away from the compressor housing section (112).
26. Electric compressor module (100) of any one of the preceding embodiments, wherein the control electronics (140) is configured to control both the heating element (134) and the electric compressor (120).
27. Electric compressor module (100) of any one of the preceding embodiments, wherein the electric connectors (150) comprise a high-volt connector (152) and a low-volt connector (154).

### Reference Sign list

- 2: Axial direction; axially
- 4: Radial direction; radially
- 6: Circumferential direction; circumferentially
- 100: Electric compressor module
- 110: Housing
- 112: Compressor housing section
- 114: Control housing section
- 115: Base portion
- 116: Protruding portion
- 116a: Recess
- 116b: Thermal interface material
- 120: Electric compressor
- 122: Compressor wheel
- 124: Electric motor
- 130: Heater
- 132: Heating element
- 134: Coolant channel
- 135: Extended portion
- 136: Coolant ports
- 136a: Inlet port
- 136b: Outlet port
- 140: Control electronics
- 142: Circuit board
- 143: Axial passage
- 144: Electrical loads
- 144a: Inductive load, e.g., CMC
- 144b: Capacitive load, e.g., DC Link
- 150: Electric connectors
- 152: High-volt connector
- 154: Low-volt connector

## Claims

1. Electric compressor module (100) for a thermal management system of an electric vehicle, the electric compressor module (100) comprising:
a housing (110) including a compressor housing section (112) and a control housing section (114);
an electric compressor (120) having a rotation axis (120a) along an axial direction (2), the electric compressor (120) being arranged in the compressor housing section (112);
a heater (130) comprising a heating element (132) and a coolant channel (134) including coolant ports (136);
control electronics (140) comprising a circuit board (142);
electric connectors (150) which are electrically connected to the control electronics (140);
wherein the heater (130) and the control electronics (140) are arranged within the control housing section (114),
wherein the control housing section (114) is arranged axially adjacent to the compressor housing section (112), and
wherein the coolant ports (136) and the electric connectors (150) are arranged at the control housing section (114) and are oriented in the same direction.

2. Electric compressor module (100) of claim 1, wherein the coolant ports (136) and the electric connectors (150) are oriented axially towards the compressor housing section (112).

3. Electric compressor module (100) of any one of the preceding claims, wherein the control housing section (114) has a base portion (115) fixed to the compressor housing section (112), and a protruding portion (116) which extends radially (4) outwards from the base portion (115) radially (4) beyond the compressor housing section (112).

4. Electric compressor module (100) of claim 3, wherein the coolant ports (136) and the electric connectors (150) are arranged at the protruding portion (116).

5. Electric compressor module (100) of any one of the preceding claims, wherein the coolant ports (136) extend from the coolant channel (134) axially beyond the circuit board (142).

6. Electric compressor module (100) of claim 5, wherein the coolant ports (136) are arranged circumferentially (6) and/or radially (4) outside the circuit board (142), optionally wherein the coolant channel (134) has an extended portion (135) which extends circumferentially (6) and/or radially (4) outside the circuit board (142), and wherein the coolant ports (136) extend axially beyond the circuit board (142) from the extended portion (135).

7. Electric compressor module (100) of claim 5, wherein the circuit board (142) comprises an axial passage (143) through which the coolant ports (136) extend axially beyond the circuit board (142).

8. Electric compressor module (100) of any one of the preceding claims if at least dependent on claim 3, wherein the protruding portion (116) at least partially protrudes axially towards the compressor housing section (112) thereby forming a recess (116a) within the control housing section (114).

9. Electric compressor module (100) of claim 8, wherein the control electronics (140) comprise electrical loads (144), such as an inductive load (144a) and a capacitive load (144b), which are arranged in the recess (116a).

10. Electric compressor module (100) of any one of the preceding claims, wherein the circuit board (142) is arranged axially adjacent to the heater (130) axially towards the compressor housing section (112).

11. Electric compressor module (100) of any one of the preceding claims, wherein the circuit board (142) is arranged axially adjacent to the compressor housing section (112), wherein the coolant channel (134) is arranged axially adjacent to the circuit board (142), and wherein the heating element (132) is arranged axially adjacent to the coolant channel (134) such that the coolant channel (134) is arranged axially between the circuit board (142) and the heating element (132).

12. Electric compressor module (100) of any one of the preceding claims, wherein the coolant channel (134) is formed by a sheet metal housing.

13. Electric compressor module (100) of claim 12, wherein the sheet metal housing comprises two sheet metal housing parts which are brazed or welded together.

14. Electric compressor module (100) of any one of claims, wherein the coolant ports (136) are brazed or welded to the coolant channel (134).

15. Electric compressor module (100) of any one of the preceding claims, wherein the heating element (132) comprises a conductive layer which is applied on an outside surface of the coolant channel (134), the outside surface being directed axially away from the compressor housing section (112).
